# EUROPÄISCHE PATENTSCHRIFT

(11) **EP 1 746 117 B1**
(45) Veröffentlichungstag und Bekanntmachung des Hinweises auf die Patenterteilung: **27.02.2013**
(21) Anmeldenummer: 06117371.2
(22) Anmeldetag: 18.07.2006
(51) Int. Cl.: C08G 18/10, C08G 18/42

(54) **Isocyanatgruppen enthaltende Prepolymere**
Prepolymers containing isocyanate groups
Prépolymères contenant des groupes isocyanates

(30) Priorität: 22.07.2005 DE 102005035000
(43) Veröffentlichungstag der Anmeldung: 24.01.2007
(73) Patentinhaber: BASF SE, 67056 Ludwigshafen (DE)
(72) Erfinder: Wind, Michael, 32689, Kalletal (DE); Fritz, Ralf, 49143, Bissendorf-Schledehausen (DE); Murrar, Imbridt, 01968, Senftenberg (DE); Reese, Hans-Jürgen, 49401, Damme (DE); Schmidt, Hans Ulrich, 49090, Osnabrück (DE)

(56) Entgegenhaltungen:
- EP-A- 1 138 707
- EP-A2- 0 546 399
- WO-A-03/006521
- DE-A1- 10 351 530
- DE-A1- 19 939 840
- KIM I ET AL: "Polymerization of propylene oxide by using double metal cyanide catalysts and the application to polyurethane elastomer", POLYMER, ELSEVIER SCIENCE PUBLISHERS B.V, GB, vol. 44, no. 11, 1 May 2003 (2003-05-01), pages 3417-3428, XP027100287, ISSN: 0032-3861 [retrieved on 2003-05-01]

## Beschreibung

Gegenstand der Erfindung ist ein Verfahren zur Herstellung von Isocyanatgruppen enthaltenden Prepolymeren mit einem geringen Gehalt an monomeren Isocyanaten durch Umsetzung von Diisocyanaten mit mindestens einer Verbindung mit mehr als zwei mit Isocyanatgruppen reaktiven Wasserstoffatomen und gegebenenfalls anschließende Entfernung der nicht umgesetzten monomeren Diisocyanate gemäß Anspruch 1.

Polymere Polyisocyanate, Polyisocyanatprepolymere, enthaltend Urethangruppen und Isocyanatgruppen sowie modifizierte Polyisocyanate, im folgenden als Polyisocyanate bezeichnet, sind wichtige Ausgangs- bzw. Zwischenprodukte für die Herstellung von Polyurethanen. Sie sind seit langem bekannt und vielfach in der Literatur beschrieben.

Die Herstellung dieser Verbindungen ist allgemein bekannt. So erfolgt die Herstellung von Urethangruppen enthaltenden Prepolymeren durch Umsetzung von Verbindungen mit mindestens zwei mit Isocyanatgruppen reaktiven Wasserstoffatomen, insbesondere Polyolen, mit einem Überschuss an Polyisocyanaten.

Bei der Herstellung der Isocyanatgruppen enthaltenden Prepolymere verbleiben zumeist nicht umgesetzte Monomere des im Überschuss eingesetzten Diisocyanates unabhängig von der Reaktionszeit im Prepolymer. Dieser Restgehalt an monomerem Diisocyanat kann sich bei der Applikation von Isocyanatprepolymeren oder bei ihrer Weiterverarbeitung störend auswirken. Der Anteil an monomerem Isocyanat in diesen Produkten kann mehr als 50 Gew.-% betragen. Monomere Isocyanate, wie beispielsweise das aromatische Toluylendiisocyanat (TDI), das aliphatische Hexamethylen-1,6-diisocyanat (HDI) und das cycloaliphatische Isophorondiisocyanat (IPDI) haben einen bereits bei Raumtemperatur merklichen Dampfdruck und wirken daher insbesondere bei Sprühapplikationen durch die dabei auftretenden Isocyanatdämpfe toxisch. Bei einer Applikation bei erhöhten Temperaturen, wie sie beispielsweise bei der Verarbeitung von Klebstoffen häufig erforderlich sind, bilden aber auch die Isomere des Diphenylmethandüsocyanats (MDI) aerosol- bzw. gasförmige Emissionen.

Dies wird als ein Nachteil angesehen, da die Toxizität der monomeren Isocyanate die Anwendbarkeit dieser Polyisocyanate, Polyisocyanatprepolymere und/oder Polyisocyanatderivate einschränkt bzw. kostenintensive Sicherheitsmaßnahmen für den Schutz des Verarbeiters bzw. besondere Schutzmaßnahmen bei Transport und Lagerung erforderlich macht.

Es besteht daher insbesondere auf Seiten der Anwender großes Interesse an Diisocyanat-freien Polyisocyanaten, Polyisocyanatprepolymeren und/oder modifizierten Polyisocyanaten. Weiterhin können freie oder nicht vollständig umgesetzte Diisocyanate an sich oder in Form ihrer aminischen Umsetzungsprodukte mit Feuchtigkeit sogenannte Migrate bilden, die in unerwünschter Weise aus dem fertigen Polyurethanprodukt an dessen Oberfläche und von dort, wie im Falle von Fahrzeuginneneinrichtungen, in die Umgebungsluft oder, wie im Falle von Verpackungsfolien, in das verpackte Produkt wandern. Monomeres MDI neigt darüber hinaus im Prepolymer zur Kristallisation. Desweiteren können auch die mechanischen Eigenschaften auf Grund von Polyharnstoffbildung auf der Oberfläche dieser Anwendungen verschlechtert werden.

Bei üblichen Prepolymeren, die noch signifikante Mengen an monomerem Diisocyanat enthalten, werden die Produkteigenschaften, wie beispielsweise die Viskosität, vorwiegend durch das nicht abreagierte, freie Diisocyanat bestimmt. Erst bei Polyurethanpre polymeren mit einem geringen Gehalt an freiem Diisocyanat, beispielsweise auf Basis von Toluylendiisocyanat (TDI) oder auch von Diphenylmethandiisocyanat (MDI), wie sie aus den genannten Gründen in jüngerer Zeit am Markt verlangt werden, beeinflusst die Bildung oligomerer Produkte in starkem Maße die Produktviskosität und andere polymerphysikalische Kenngrößen des Systems.

Die Produktverteilung im Prepolymer wird maßgeblich durch das molare Verhältnis der Edukte zueinander beeinflusst. So müssen die addierbaren Gruppen möglichst in äquimolaren Mengen vorhanden sein, um hohe Molekulargewichte zu erzielen. Es resultieren breite Molekulargewichtsverteilungen mit geringem Molanteil der einzelnen Fraktionen.

Auf der anderen Seite wird mit zunehmendem stöchiometrischen Überschuss einer Komponente der mittlere Polymerisationsgrad verkleinert und die Bildung höhermolekularer Addukte zurückgedrängt. Betrachtet man die Umsetzung von Diisocyanaten mit Diolen, so kann für den Grenzfall sehr hoher molarer Diisocyanat:Diol-Überschüsse (n_{Diisocyanat}/n_{Diol} >> 1) die Ausbeute an reinem 2:1-Addukt aus Isocyanat und Polyol theoretisch nahezu 100 % des molaren Formelumsatzes betragen.

Allerdings muss dann der im Produkt verbliebene hohe molare Überschuss an monomerem Diisocyanat gegebenenfalls wieder aufwendig entfernt werden. Dies kann durch Destillation, Lösungsmittelextraktion oder Filtration erfolgen und ist beispielsweise in WO 01/40342 beschrieben. Daher ist der Einsatz hoher molarer Überschüsse an freiem Isocyanat möglichst zu vermeiden.

Eine weitere Möglichkeit, die Bildung höhermolekularer Addukte bei der Herstellung der Prepolymere zurückzudrängen, ist die Verwendung von Diisocyanaten mit Isocyanatgruppen unterschiedlicher Reaktivität. Gängige, kommerziell erhältliche Beispiele für solche, im folgenden als asymmetrisch bezeichneten Diisocyanate sind 2,4-TDI, 2,4'-MDI oder IPDI.

Bei Einsatz von 2,4-TDI, bei dem der Unterschied in der Reaktivität der beiden Isocyanatgruppen stark ausgeprägt ist, können Diisocyanat-freie Prepolymere mit enger Molekulargewichtsverteilung bereits bei einem moderaten stöchiometrischen Überschuss der Isocyanatkomponente auch ohne zusätzliche Reinigungsschritte erhalten werden.

Im Falle von 2,4'-MDI, das aufgrund seiner niedrigeren Flüchtigkeit ohnehin schwieriger zu entfernen ist, ist der Reaktivitätsunterschied der Isocyanatgruppen weit weniger stark ausgeprägt. Für 2,4'-MDI können niedrigere Polymerisationsgrade nur durch Einsatz noch immer erheblicher stöchiometrischer Isocyanatüberschüsse realisiert werden, die dann gegebenenfalls wieder aufwendig entfernt werden müssen. Für geringere stöchiometrische NCO:XH-Überschüsse kleiner 2 können, wie in EP 1 404 733 A1 beschrieben, auch Diisocyanat-arme 2,4'-MDI Prepolymere ohne zusätzlichen Aufarbeitungsschritt erhalten werden. Allerdings ist dieser Ansatz im wesentlichen auf difunktionelle NCO-Prepolymere beschränkt.

Bei der Umsetzung Diisocyanat-armer Prepolymere mit einer NCO-Funktionalität größer zwei mit Verbindungen, die mit Isocyanat reaktive Gruppen enthalten, treten hohe Verarbeitungsviskositäten auf. Dies gilt insbesondere für NCO-reaktive Verbindungen mit einer Funktionalität größer zwei, für Verarbeitungen bei erhöhter Temperatur wie bei der Herstellung von Schmelzklebstoffen und für Diisocyanat-arme Prepolymere mit hohem NCO-Gehalt.

In einer Vielzahl von Anwendungen, beispielsweise für die Herstellung von Polyurethandichtstoffen, Montageschäumen oder Vergussmassen, wäre aber die Bereitstellung Diisocyanat-armer Prepolymere mit erhöhter NCO-Funktionalität größer 2 wünschenswert.

Solche höherfunktionellen Diisocyanat-armen Prepolymere sind nicht üblich, da sie aufgrund des erhöhten Verzweigungsgrades im allgemeinen eine höhere Viskosität besitzen als monomerfreie difunktionelle NCO-Prepolymere mit einem vergleichbaren Gehalt an reaktiven NCO-Gruppen. Insbesondere ein hoher Polymerisationsgrad würde den Verzweigungsgrad weiter erhöhen. Der Aufbau hoher Molekulargewichte kann zwar, wie oben dargelegt, durch erhöhte Isocyanat-Überschüsse zurückgedrängt werden, das überschüssige monomere Isocyanat müsste aber im Anschluss aufwendig entfernt werden. Es wäre demnach weiterhin wünschenswert, ein Verfahren bereitzustellen, welches einen kostengünstigen Zugang zu höherfunktionellen Diisocyanat-armen Prepolymeren bietet.

Verfahren zur Herstellung monomerarmer Polyisocyanate, Polyisocyanatprepolymere und/oder Polyisocyanatderivate sind vielfach beschrieben, beispielsweise in EP 316738, JP 9053522, JP 08176252, JP 08176253, US 5,202,001, US 5,115,071, EP 1241197 und DE 19939840. Allen diesen Veröffentlichungen ist die Nutzung der bekannten Verdampfertechnologien, wie Dünnschicht- und Kurzwegverdampfer, gegebenenfalls in Gegenwart von organischen Lösungsmitteln oder inerten Gasen als Schleppmittel gemeinsam.

In WO 03/46040 werden monomerarme, Isocyanatgruppen enthaltende Prepolymere beschrieben, die durch Umsetzung von sowohl symmetrischen als auch asymmetrischen Diisocyanaten mit Diolen hergestellt werden. Hierbei können bei der Herstellung übliche Katalysatoren, wie Amine oder metallorganische Katalysatoren, verwendet werden.

II Kim et al. beschreiben in Polymer 44 (2003), Seite 3417 bis 3428 die Polymerisation von Propylenoxide durch Multimetallcyanid-Katalysatoren (DMC-Katalysatoren) and deren Anwendung für Polyurethan-Elastomere.

WO 03/006521 beschreibt ein Verfahren zur Herstellung monomerfreier Diisocyanate auf Basis von MDI mit einem Gehalt am 2,4'-MDI-Isomeren größer 95%, wobei die Alkoholkomponente mindestens ein Diol enthält. Das Verhältnis an Isocyanat:OH-Gruppen ist auf 1,05:1 bis 2:1 beschränkt, daher ist keine nachträgliche Entfernung des monomeren Diisocyanates erforderlich.

EP 1 237 971 beschreibt eine reaktive Polyurethan-Kleb-/Dichtstoff-Zusammensetzung auf Basis von hochmolekularen Polyisocyanaten mit einem Anteil an monomerem Diisocyanat kleiner 10%. Diese monomerarmen Polyisocyanate sind auf difunktionelle Polyisocyanate beschränkt und werden durch Umsetzung von Diolen mit monomeren Diisocyanaten hergestellt. Weiterhin werden monomerarme Prepolymere, die aus definierten ABₙ-Strukturen aus Isocyanat und Polyol aufgebaut sind, sowie Verfahren zu deren Herstellung beschrieben.

EP 1 249 460 A1 beschreibt auf 4,4'-MDI und Polypropylenoxid-Polyetherolen basierende Prepolymere mit perfekten ABₙ-Strukturen von mindestens 80 %. Da der Gehalt an asymmetrischen Diisocyanaten beschränkt ist, können derart hohe Strukturperfektionen nur durch hohe Diisocyanatüberschüsse realisiert werden, die dann wieder aufwendig zu entfernen sind. EP 1 240 459 A1 beschreibt Polyurethanklebstoffe auf der Basis solcher perfekten Prepolymere.

EP 0 370 408 beschreibt Prepolymere mit einem Anteil von mindestens 85 % perfekter A-B-A-Strukturen, wobei als Isocyanatkomponente jedoch alkylsubstituierte TDI-Derivate in hohen molaren Überschüssen von 4:1 bis 20:1 gegenüber der rein difunktionellen Polyolkomponente eingesetzt werden.

WO 041055087 beschreibt ein Verfahren zur Herstellung von Prepolymeren mit einem geringen Gehalt an monomeren Diisocyanaten, das ohne einen separaten Schritt zur Entfernung der monomeren Diisocyanate auskommt. Dies wird erreicht durch den Einsatz von asymmetrischen Diisocyanaten und die Verwendung von Carbonsäureamiden als Katalysatoren. Bei diesem Verfahren können auch mehr als zweifunktionelle Ausgangsstoffe eingesetzt werden. Nachteilig bei diesem Verfahren ist insbesondere die Verwendung der Carbonsäureamide als Katalysatoren, da diese Produkte nicht zu den üblicherweise in der Polyurethanchemie eingesetzte Katalysatoren gehören und bei der Anwendung der Prepolymere zu Problemen führen können.

WO 03/033562 beschreibt eine bei Raumtemperatur feste, reaktive Klebstoffzusammensetzung, die aus monomerarmen Prepolymeren auf Basis von 2,4'-MDI und 2-oder 3-funktionellen Polyolen hergestellt wird. Als Polyole für die Herstellung der Prepolymere kommen Polyetheralkohole mit einem Molekulargewicht von unter 1000 g/mol und/oder kristalline, teilkristalline oder amorphe Polyesteralkohole zum Einsatz. Die Klebstoffzusammensetzungen weisen ein Molverhältnis von NCO-Gruppen zu mit NCO-Gruppen reaktiven Wasserstoffatomen von 1,1 bis 2,0 auf. Damit können diese Produkte nur für begrenzte Einsatzgebiete verwendet werden.

Aufgabe der Erfindung war es, Isocyanatgruppen enthaltende Prepolymere kostengünstig bereitzustellen, die einen geringen Anteil an monomerem Diisocyanat, vorzugsweise kleiner 0,1 Gew.-%, vorzugsweise eine NCO-Funktionalität Fₙ > 2, und eine verarbeitbare Viskosität aufweisen.

Die Aufgabe konnte gelöst werden, indem Verbindungen mit vorzugsweise mehr als 2 mit Isocyanatgruppen reaktiven Wasserstoffatomen, d. h. mit einer H-aciden Funktionalität Fₙ > 2, mit asymmetrischen Polyisocyanaten bei Überschüssen an Diisocyanat zwischen 1:1 und 7:1, bevorzugt zwischen 1:1 und 4:1 und besonders bevorzugt zwischen 1:1 und 3:1 umgesetzt werden, die Umsetzung katalysatorfrei oder in Anwesenheit von tertiären Aminen oder organischen Metallverbindungen als Katalysatoren durchgeführt wird und vorzugsweise kein zusätzlicher Schritt zur Entfernung des nicht umgesetzten monomeren Diisocyanats erforderlich ist, wobei als Verbindungen mit mindestens zwei mit Isocyanatgruppen reaktiven Wasserstoffatomen b) Polyetheralkohole eingesetzt werden, die durch Anlagerung von Alkylenoxiden an H-funktionelle Starter unter Verwendung von DMC-Katalysatoren hergestellt wurden.

Gegenstand der Erfindung ist demzufolge ein Verfahren zur Herstellung von Isocyanatgruppen enthaltenden Prepolymeren mit einem Gehalt an monomeren Isocyanaten von kleiner als 10 Gew.-%, vorzugsweise von kleiner 2 Gew.-%, bevorzugt kleiner 1 Gew.-%, besonders bevorzugt kleiner 0,2 Gew.-% und insbesondere kleiner 0,1 Gew.-%, bezogen auf das Gewicht des Prepolymeren, durch Umsetzung von a) asymmetrischen Polyisocyanaten mit b) Verbindungen mit mindestens 2 mit Isocyanatgruppen reaktiven Wasserstoffatomen bei einem Überschuss an Polyisocyanat zwischen 1:1 und 7:1, bevorzugt zwischen 1:1 und 4:1 und besonders bevorzugt zwischen 1:1 und 3:1, die Umsetzung katalysatorfrei oder in Anwesenheit von tertiären Aminen oder organischen Metallverbindungen als Katalysatoren durchgeführt wird und vorzugsweise kein zusätzlicher Schritt zur Entfernung des nicht umgesetzten monomeren Diisocyanats erforderlich ist. Erfindungsgemäß werden dabei als Verbindungen mit mindestens zwei mit Isocyanatgruppen reaktiven Wasserstoffatomen b) Polyetheralkohole eingesetzt, die durch Anlagerung von Alkylenoxiden an H-funktionelle Starter unter Verwendung von DMC-Katalysatoren hergestellt wurden.

In einer bevorzugten Ausführungsform des erfindungsgemäßen Verfahrens weist die Komponente a) mehr als zwei NCO-Gruppen und/oder die Komponente b) mehr als zwei mit NCO-Gruppen reaktive Wasserstoffatome auf.

Umsetzungsprodukte von Polyisocyanaten mit Verbindungen mit Gruppen, die mit Isocyanatgruppen reaktiv sind, insbesondere Verbindungen mit Hydroxylgruppen, im folgenden auch als Prepolymere bezeichnet, sind, wie oben ausgeführt, seit langem bekannt und vielfach beschrieben.

Unter Polyisocyanaten im Sinne der vorliegenden Erfindung werden Diisocyanate, Umsetzungsprodukte von Polyisocyanaten mit sich selbst, Umsetzungsprodukte von Polyisocyanate mit Verbindungen mit Isocyanatgruppen reaktiven Gruppen und/oder polymere Polyisocyanate verstanden.

Als Polyisocyanate kommen dabei insbesondere asymmetrische aliphatische, cycloaliphatische und insbesondere aromatische Diisocyanate in Betracht. Im einzelnen seien beispielhaft genannt: aliphatische Diisocyanate, wie 2-Methyl-pentamethylendiisocyanat-1,5, 2-Ethyl-butylen-diisocyanat-1,4 oder Mischungen aus den genannten C₆-Alkylen-diisocyanaten, , cycloaliphatische Diisocyanate, wie 1-lsocyanato-3,3,5-trimethyl-5-isocyanatomethyl-cyclohexan (Isophoron-diisocyanat), , 1-Methyl-2,4- und -2,6-cyclohexan-diisocyanat sowie die entsprechenden Isomerengemische, 2,4'-Dicyclohexylmethan-diisocyanat und vorzugsweise aromatische Diisocyanate, wie 2,4-und 2,6-Toluylen-diisocyanat (TDI) sowie deren Gemische, 2,4'-Diphenylmethandiisocyanat (MDI) sowie Mischungen aus 2,4'-MDI und 2,2'- und/oder 4,4'-MDI, Polyphenyl-polymethylen-polyisocyanate (Polymer-MDI, Roh-MDI, PMDI) mit zwei oder mehr aromatischen Systemen, Mischungen aus 2,4'-, 2,2'- und/oder 4,4'-Diphenylmethandiisocyanaten und Polyphenyl-polymethylen-polyisocyanaten (Roh-MDI), Mischungen aus Roh-MDI und Toluylen-Diisocyanaten, Polyphenyl-Polyisocyanate, urethanmodifizierte flüssige 4,4'- und/oder 2,4'-Diphenylmethandiisocyanate.

Nach dem erfindungsgemäßen Verfahren können besonders vorteilhaft Isocyanatgruppen und Urethangruppen enthaltende Prepolymere hergestellt und entmonomerisiert werden, bei denen als Polyisocyanat MDI, bevorzugt 2,4'-MDI, TDI, bevorzugt 2,4-TDI, 2,6-TDI und Mischungen daraus oder IPDI eingesetzt werden.

Neben difunktionellen Polyisocyanaten können als erfindungsgemäße Polyisocyanate auch Polyisocyanate mit mehr als zwei Isocyanatgruppen eingesetzt werden. Dabei können Umsetzungsprodukte von Isocyanaten mit sich selbst, im folgenden als modifizierte Polyisocyanate bezeichnet, verwendet werden. Modifizierte Polyisocyanate enthalten neben Isocyanatgruppen Isocyanurat-, Allophanat-, Biuret-, Uretdion-, Uretonimin-, Carbodiimidgruppen. Auch diese Verbindungen sind allgemein bekannt und vielfach beschrieben. Die Herstellung dieser Verbindungen ist beispielsweise beschrieben im Kunststoffhandbuch, Band 7 "Polyurethane", 3. Auflage 1993, Carl Hanser Verlag München Wien, Kapitel 3.3.2.

Die Herstellung von Polyisocyanaten mit Isocyanurat- oder Uretdiongruppen erfolgt durch katalytische Umsetzung der Isocyanate mit sich selbst. Der Einbau von Harnstoffgruppen erfolgt durch Umsetzung der Isocyanate mit Aminen und/oder Wasser. Durch Umsetzung der Harnstoffgruppen mit weiteren Isocyanatgruppen können Biuretgruppen erhalten werden. Allophanatgruppen können durch Umsetzung von Urethangruppen mit weiteren Isocyanatgruppen erhalten werden. Carbodiimide können durch Reaktion von Isocyanaten mit sich selbst unter Abspaltung von Kohlendioxid erfolgen. Durch Umsetzung der Carbodiimidgruppen mit weiteren Isocyanatgruppen können Uretonimingruppen erhalten werden.

Diese modifizierten Polyisocyanate haben vorzugsweise einem NCO-Gehalt von 5 bis 50 Gew.-%.

Als Ausgangsverbindungen zur Herstellung der modifizierten Polyisocyanate können bevorzugt aliphatische Diisocyanate, wie HDI, cycloaliphatische Diisocyanate, wie IPDI und/oder aromatische Polyisocyanate, wie MDI, insbesondere das 2,4'-MDI-Isomer, 4,4'-MDI-Isomer oder MDI-Isomerengemische, Polymer-MDI, sowie TDI-Isomere allein oder im Gemisch miteinander, eingesetzt werden.

Weniger bevorzugt im Sinne der Erfindung sind polymere Polyisocyanate. Polymere Polyisocyanate sind polymere Gemische von mindestens zwei Isocyanatgruppen enthaltenden Verbindungen. Vorzugsweise handelt es sich dabei um Gemische von Homologen des MDI mit einem Monomer-MDI-Gehalt von 10 bis 50 Gew.-%. Derartige Gemische mit unterschiedlichem Monomer-MDI-Gehalt sind kommerziell verfügbar.

Derartige Gemische aus monomerem MDI und seinen höheren Homologen werden technisch in großem Umfang durch Umsetzung von Diphenylmethandiamin (MDA) mit Phosgen hergestellt. Eine Beschreibung diese Verfahrens findet sich beispielsweise im Kunststoffhandbuch, Band 7 "Polyurethane", 3. Auflage 1993, Carl Hanser Verlag München Wien, Kapitel 2.2.1.

Weiterhin können als Polyisocyanate Polymethylen-polyphenylen-polyisocyanate mit mehr als zwei aromatischen Ringen und mehr als zwei Isocyanatgruppen im Molekül eingesetzt werden, die keine signifikanten Anteile an 2-Kern-MDI enthalten. Derartige Verbindungen sind beispielsweise beschrieben in DE 10350816 oder in EP 1518874.

Bei den dort beschriebenen monomerarmen polymeren Polyisocyanaten handelt es sich vorzugsweise um mindestens dreikernige Homologe des MDI.

Die für das erfindungsgemäße Verfahren eingesetzten Isocyanatgruppen und Urethangruppen enthaltenden NCO-Prepolymere mit einer Funktionalität Fₙ > 2 werden vorzugsweise durch Umsetzung von Polyisocyanaten mit Verbindungen mit mehr als zwei mit Isocyanatgruppen reaktiven Wasserstoffatomen hergestellt.

Als Verbindungen mit mehr als zwei mit Isocyanatgruppen reaktiven Wasserstoffatomen können vorzugsweise solche eingesetzt werden, die mehr als zwei Hydroxyl- und/oder Amino- oder Mercaptogruppen im Molekül aufweisen. Insbesondere weisen diese Verbindungen ein Molekulargewicht Mn zwischen 60 und 10000 g/mol auf. Besonders bevorzugt werden die Verbindungen mit mehr als zwei mit Isocyanatgruppen reaktiven Wasserstoffatomen ausgewählt aus der Gruppe, enthaltend mehrwertige Alkohole, Polyetheralkohole, Polyesteralkohole, Polyetheresteralkohole, Polyetherpolyamine, hydroxylgruppenhaltige Polycarbonate, hydroxylgruppenhaltige Polyacetale und beliebige Mischungen aus mindestens zwei dieser Verbindungen. Besonders bevorzugt sind mehrwertige Alkohole, Polyetheralkohole und Polyesteralkohole sowie Mischungen daraus.

Beispiele für mehrwertige Alkohole sind Alkandiole mit 2 bis 10, vorzugsweise 2 bis 6 Kohlenstoffatomen sowie höhere Alkohole, wie Glyzerin, Trimethylolpropan oder Pentaerythrit. Weiterhin können natürliche Polyole, wie Rizinusöl, eingesetzt werden.

Die zur Herstellung der Prepolymere eingesetzten Polyetheralkohole weisen vorzugsweise eine Funktionalität im Bereich von 2 bis 10 auf, besonders bevorzugt von 2,1 bis 4 und insbesondere von 2,5 bis 3,2. Ihre Herstellung erfolgt üblicherweise durch Anlagerung von Alkylenoxiden, insbesondere Ethylenoxid und/oder Propylenoxid, an H-funktionelle Startsubstanzen. Die Alkylenoxide können dabei einzeln, nacheinander oder als Mischung eingesetzt werden. Als Startsubstanzen kommen beispielsweise Wasser, Diole, Triole, höherfunktionelle Alkohole, Zuckeralkohole, aliphatische oder aromatische Amine oder Aminoalkohole in Betracht.

Besonders geeignet sind Polyetheralkohole mit einem mittleren Molekulargewicht zwischen 1000 und 6000 g/mol und einer mittleren OH-Funktionalität von 2,5 bis 3,2. Besonders bevorzugte Startsubstanzen zur Herstellung dieser Polyetheralkohole sind Trimethylolpropan und Glyzerin. Bevorzugte Alkylenoxide sind Ethylenoxid und Propylenoxid.

Erfindungsgemäß werden zur Herstellung der monomerarmen MDI-Prepolymere als Komponente b) Polyetheralkohole eingesetzt, bei denen die Anlagerung der Alkylenoxide an die H-funktionellen Startsubstanzen durch Multimetallcyanidverbindungen, auch als DMC-Katalysatoren bezeichnet, als Katalysatoren katalysiert ist. Die DMC-Katalysatoren sind allgemein bekannt. Besonders bevorzugt als DMC-Katalysator wird Zinkhexacyanocobaltat eingesetzt. Die so erhaltenen Polyetheralkohole werden im folgenden auch als DMC-Polyole bezeichnet.

Durch den Einsatz von DMC-Katalysatoren können Polyetheralkohole mit einer Funktionalität erhalten werden, die der des eingesetzten Starters entspricht. Sie zeichnen sich weiterhin durch einen verringerten Gehalt an ungesättigten Bestandteilen gegenüber basisch katalysierten Polyetheralkoholen aus. Ein weiterer Vorteil beim Einsatz von DMC-Katalysatoren ist im Vergleich zu basischen Katalysatoren eine höhere Raum-Zeit-Ausbeute bei der Herstellung der Polyetheralkohole. DMC-Polyetheralkohole sind durch kürzere Chargenlaufzeiten und einen aufarbeitungsfreien Herstellungsprozess kostengünstiger als vergleichbare KOH-Polyetheralkohole.

Der DMC-Katalysator kann nach der Herstellung aus den Polyolen entfernt werden. Es ist jedoch üblich, ihn im Produkt zu belassen.

Es wurde nun überraschenderweise gefunden, dass durch Einsatz von DMC-Polyolen bei gleichem Herstellungsprozess Prepolymere mit mindestens gleichen Eigenschaften, einem niedrigeren Gehalt an freiem monomerem Isocyanat und einer niedrigeren Viskosität im Vergleich zu analogen KOH-Polyetheralkoholen erhalten werden.

Die DMC-Polyole werden, wie beschrieben, durch Anlagerung von Alkylenoxiden an H-funktionelle Startsubstanzen, insbesondere Alkohole, hergestellt. Als Alkylenoxid wird insbesondere Propylenoxid, gegebenenfalls im Gemisch mit Ethylenoxid, eingesetzt. Als Starter werden insbesondere zwei- und/oder dreifunktionelle Alkohole eingesetzt, bevorzugt Ethylenglykol und/oder Glyzerin. Besonders geeignet sind DMC-Polyole mit einem mittleren Molekulargewicht zwischen 1000 und 6000 g/mol und einer mittleren OH-Funktionalität von 2 bis 10, vorzugsweise 2,5 bis 10,0, besonders bevorzugt 2,5 bis 5,0.

Erfindungsgemäß werden die DMC-Polyole mit asymmetrischen Diisocyanaten umgesetzt.

Ebenfalls bevorzugt sind Polyesteralkohole mit einem mittleren Molekulargewicht zwischen 1000 und 5000 g/mol, einer mittleren OH-Funktionalität von 2 bis 3. Besonders bevorzugt sind Polyesteralkohole auf Basis von Adipinsäure. Die Herstellung der Prepolymere erfolgt, wie dargelegt, durch Umsetzung der Polyisocyanate mit den Verbindungen mit mehr als zwei mit Isocyanatgruppen reaktiven Wasserstoffatomen.

Als Katalysatoren, welche insbesondere die Reaktion zwischen den NCO-Gruppen der Diisocyanate und den Hydroxylgruppen der Polyalkohole bei der Herstellung der Prepolymere beschleunigen, können die nach dem Stand der Technik bekannten und üblichen stark basischen Amine sowie organische Metallverbindungen wie Titansäureester, Eisenverbindungen wie z.B. Eisen-(III)-acetylacetonat, Zinnverbindungen, z.B. Zinn-(II)-Salze oder Dialkylzinn-(IV)-Salze oder Gemische mit mindestens zwei der genannten Katalysatoren sowie synergistisch wirkende Kombinationen aus stark basischen Aminen und organischen Metallverbindungen eingesetzt werden. Bevorzugte Beispiele für diese Verbindungen sind Triethylendiamin, N,N,N',N",N"-Pentameihyldiethylentriamin, Tetramethyliminobispropylamin, 2,2'-Dimorpholinodiethylether, Bis(dimethylaminopropyl)-N-isopropanolamin, Dimethylaminocyclohexan, N,N-Dimethylbenzylamin, 4-Methylmorpholin, 1,4-Diamino-bicyclo-(2,2,2)-octan, oder organischen Metallverbindungen, wie z. B. Dibutylzinndilaurat, Zinn(II)-octoat, Zinn(II)-2-ethylhexanoat, Cobaltoctoat, Cobaltnaphthenat, Eisen(III)-acetylacetonat sowie beliebige Gemische aus mindestens zwei der genannten Verbindungen. Die Katalysatoren können in üblichen Mengen, beispielsweise 0,002 bis 5 Gew.-%, bezogen auf die Polyalkohole, verwendet werden. In einer besonderen Ausführungsform des erfindungsgemäßen Verfahrens können die Katalysatoren vor der Entfernung der monomeren Diisocyanate, die vorzugsweise mittel Destillation erfolgt, blockiert werden, um eine Rückspaltung der Prepolymere zu verhindern. Auf eine Katalyse durch Carbonsäurederivate, insbesondere Carbonsäureamide, kann dabei verzichtet werden.

Die Umsetzung der Polyisocyanate mit den Verbindungen mit mehr als zwei mit Isocyanatgruppen reaktiven Wasserstoffatomen kann kontinuierlich oder diskontinuierlich in üblichen Reaktoren, beispielsweise bekannten Rohr- oder Rührkesselreaktoren, gegebenenfalls in Anwesenheit von inerten Lösungsmitteln, d. h. gegenüber den Isocyanaten und XH-funktionellen Verbindungen nicht reaktiven Verbindungen, erfolgen.

Um höherfunktionelle NCO-Prepolymere zu erhalten, wird mit einem Verhältnis von NCO-Gruppen zu mit NCO-Gruppen reaktiven Wasserstoffatomen von größer 1, das heißt mit einem Überschuss an Polyisocyanat, gearbeitet. Das molare NCO:XH-Verhältnis liegt dabei in der Regel im Bereich zwischen 1:1 und 7:1, bevorzugt zwischen 1:1 und 4:1 und besonders bevorzugt zwischen 1:1 und 3:1.

In einer bevorzugten Ausführungsform der Erfindung werden Diisocyanate mit Verbindungen mit mehr als zwei mit Isocyanatgruppen reaktiven Wasserstoffatomen umgesetzt.

In einer weiteren Ausführungsform der Erfindung können Prepolymere mit mehr als zwei reaktiven NCO-Gruppen auch durch Umsetzung von modifizierten oder polymeren Polyisocyanaten, die selbst bereits eine NCO-Funktionalität größer 2 besitzen, mit Verbindungen mit mindestens 2 mit Isocyanat reaktiven Gruppen, d. h. beispielsweise auch mit rein difunktionellen Polyolen, umgesetzt werden.

Die erhaltenen monomerarmen NCO-Prepolymere mit einem Monomergehalt von kleiner als 10 Gew.-%, vorzugsweise von kleiner 2 Gew.-%, bevorzugt kleiner 1 Gew.-%, besonders bevorzugt kleiner 0,2 Gew.-% und insbesondere kleiner 0,1 Gew.-%, bezogen auf das Gewicht des Prepolymeren, haben vorzugsweise einen NCO-Gehalt von 0,5 bis 20 Gew.-%, vorzugsweise von 0,5 bis 10 Gew.-% und besonders bevorzugt 1 bis 3 Gew.-%.

Da, wie eingangs aufgeführt, der Anteil an monomeren Diisocyanaten im Prepolymer gering sein soll, muss das nicht umgesetzte Diisocyanat nach der Umsetzung aus dem Prepolymer gegebenenfalls entfernt werden. Dies kann auf üblichem Wege geschehen, beispielsweise durch Destillation, vorzugsweise Dünnschichtdestillation, oder besonders bevorzugt durch Verwendung mindestens eines Kurzwegverdampfers, wie beispielsweise in WO 03/46040 beschrieben.

Die Entfernung des monomeren Diisocyanates kann neben Dünnschicht- und/oder Kurzwegverdampfung ferner auch durch Fallfilm-Kurzwegverdampfung, beschrieben in Chemie Technik Nr. 11/2003, 32. Jahrgang, Seiten 36-37, und/oder anderen Reinigungsverfahren wie Extraktion oder Schleppmitteldestillation und/oder durch Kombination dieser Verfahren erfolgen.

In einer besonderen Ausführungsform der Erfindung werden höherfunktionelle Diisocyanat-arme reaktive NCO-Prepolymere ohne zusätzlichen Aufarbeitungsschritt, in welchem das überschüssige Diisocyanat, wie dargestellt, entfernt wird, hergestellt. Das molare Verhältnis der NCO-Gruppen zu den mit NCO-Gruppen reaktiven Wasserstoffatomen liegt dabei vorzugsweise im Bereich von 1:1 bis 3:1, besonders bevorzugt 1:1 bis 2:1. Besonders bevorzugt werden in dieser Ausführungsform Verbindungen mit zwei mit Isocyanat reaktiven Wasserstoffatomen mit einem Molgewicht von 3000 g/mol bis 5500 g/mol mit einem molaren Verhältnis der NCO-Gruppen zu den mit NCO-Gruppen reaktiven Wasserstoffatomen von größer oder gleich 2 eingesetzt. Als Diisocyanate werden bei dieser Ausführungsform bevorzugt asymmetrische Diisocyanate verwendet. Durch das Fehlen eines zusätzlichen Aufarbeitungsschrittes ist diese Verfahrensvariante kostengünstiger und es werden monomerarme NCO-Prepolymere mit verarbeitbarer Viskosität erhalten.

Unter asymmetrischen Diisocyanaten werden solche verstanden, deren Isocyanatgruppen eine unterschiedliche Reaktivität aufweisen. Vorzugsweise verwendet werden als asymmetrische Diisocyanate 2,4-TDI, 2,4'-MDI und/oder Isophorondiisocyanat (IPDI). Besonders bevorzugt ist 2,4'-MDI. Asymmetrische Diisocyanate können auch im Gemisch mit symmetrischen Diisocyanaten oder, weniger bevorzugt, mit polymeren Isocyanaten eingesetzt werden, wobei der Anteil der asymmetrischen Diisocyanate im Gemisch größer als 30 Gew.-%, bevorzugt größer als 60 Gew.-% und insbesondere bevorzugt größer als 90 Gew.-% ist.

Die erfindungsgemäß erhaltenen Diisocyanat-armen Prepolymere zeichnen sich allgemein durch eine mittlere NCO-Funktionalität Fₙ > 2, insbesondere von Fₙ = 2 - 4 und insbesondere von Fₙ = 2,5 - 3,2 aus.

Die erfindungsgemäß erhaltenen Diisocyanat-armen Prepolymere zeichnen sich durch einen Restmonomergehalt von kleiner 10 Gew.-%, vorzugsweise von kleiner 2 Gew.-%, bevorzugt kleiner 1 Gew.-%, besonders bevorzugt kleiner 0,2 Gew.-% und insbesondere kleiner 0,1 Gew.-%, bezogen auf das Gewicht des Prepolymeren, aus.

Nach dem erfindungsgemäßen Verfahren können in bezug auf kanzerogene Wirkung kennzeichnungsfreie Polyisocyanate auf Basis von TDI und, bei einem möglichen Eintritt einer Neueinstufung von MDI als kanzerogen Kategorie 3, von MDI erhalten werden.

Die erfindungsgemäßen Prepolymere zeichnen sich durch einen Gehalt an perfekten ABₙ-Strukturen (A: Verbindung mit n reaktiven Wasserstoffatomen; B: Diisocyanat) von bis zu 80 Flächen-%, vorzugsweise von bis zu 70 Flächen-% aus. Die Flächen-% können mittels Gelpermeationschromatographie (GPC) bestimmt werden.

Der Grad der ABₙ-Strukturperfektion ist, wie oben dargestellt, um so geringer, je kleiner, für eine gegebene Prepolymersynthese, das gewählte NCO:XH-Verhältnis ist. Ein geringerer Gehalt an ABₙ-Strukturen und damit ein geringerer Isocyanatüberschuss ist insofern vorteilhaft, als dann für die Herstellung Diisocyanat-armer Prepolymere weniger Diisocyanat abgetrennt werden muss. Erfolgt diese Abtrennung beispielsweise destillativ, so ist die Destillationszeit, die in erster Näherung proportional zur Menge an abzutrennendem Diisocyanat ist, bei geringeren Isocyanatüberschüssen verkürzt. Der Gesamtherstellprozess Diisocyanat-armer Prepolymere wird darüber hinaus bei geringeren Diisocyanatüberschüssen auch deshalb effektiver und damit wirtschaftlicher, da die Produktausbeute an Diisocyanat-armem Prepolymer steigt.

Eine geringere ABₙ-Strukturperfektion ist mit einem höheren Polymerisationsgrad und damit mit einer breiteren Molekulargewichtsverteilung verknüpft. Für die ganz überwiegende Zahl der Anwendungen monomerarmer Prepolymere in Polyurethanprodukten stehen aber nicht die strukturellen Vorteile und damit die mechanischen, insbesondere die elastischen Eigenschaftsverbesserungen solcher perfekter ABₙ-Strukturen im Vordergrund, sondern der kostengünstige Zugang zu solchen Produkten, der zumeist aus der toxikologischen Einstufung des monomeren Diisocyanates heraus motiviert ist. Ferner sind diese mechanischen Vorteile des finalen Polyurethanproduktes, die, für den Einsatz definierter ABₙ-Strukturen, ursächlich auf eine verbesserte Separation der morphologischen Weich- und Hartphase zurückgehen, vor allem auf lineare AB₂-Strukturen beschränkt, während erfindungsgemäß höherfunktionelle Diisocyanat-arme NCO-Prepolymere mit Fₙ > 2 beansprucht werden.

Ein erhöhter Polymerisationsgrad des Diisocyanat-armen Prepolymers, wie er aus geringeren Diisocyanatüberschüssen bei der Prepolymersynthese mit anschließender Abtrennung des monomeren Diisocyanates resultiert, ist bei gleichen Herstellungsbedingungen in der Regel aus strukturellen Gründen mit einer höheren Produktviskosität verknüpft. Erfolgt die Abtrennung des monomeren Diisocyanates destillativ, so können aber bei geringeren Diisocyanatüberschüssen höhere Verdampferdurchsätze realisiert werden, was tendenziell zu einer geringeren thermischen Produktbelastung und damit zu geringeren Produktviskositäten führt. Tatsächlich führt ein erhöhter Polymerisationsgrad bei den erfindungsgemäß beanspruchten Diisocyanat-armen NCO-Prepolymeren lediglich zu einem moderaten Viskositätsanstieg, der bei der Weiterverarbeitung keinen Mehraufwand verursacht.

Der NCO-Gehalt der erfindungsgemäßen reaktiven Isocyanatprepolymere beträgt, wie beschrieben, 0,5 bis 20 Gew.-%, bevorzugt 0,5 bis 10 Gew.-% und besonders bevorzugt 1 bis 3 Gew.-%, insbesondere 1 bis 2,3 Gew.-%. Die Viskosität der erfindungsgemäßen reaktiven Isocyanatprepolymere beträgt, gemessen nach Brockfield (ISO 255) bei 50°C 100 mPa·s bis 10⁷ mPa·s, bevorzugt 1000 bis 50000 mPa·s.

Die erfindungsgemäßen Isocyanatgruppen und Urethangruppen enthaltenden Prepolymere werden üblicherweise zur Herstellung von Polyurethanen eingesetzt. Dazu werden die Isocyanatgruppen und Urethangruppen enthaltenden Prepolymere mit Verbindungen, die mit Isocyanatgruppen reagieren können, umgesetzt. Bei den Verbindungen, die mit Isocyanatgruppen reagieren können, handelt es sich beispielsweise um Wasser, Alkohole, Amine oder Verbindungen mit Mercaptogruppen. Die Polyurethane können Schaumstoffe, insbesondere Montageschäume, 1-Komponenten- und 2-Komponenten-Polyurethanschaumstoffe, Beschichtungen, Klebstoffe, insbesondere Schmelzklebstoffe, wie z. B. Hotmelts, Verpackungsklebstoffe oder Anstrichstoffe, Thermoplaste sowie kompakte oder zellige Elastomere sein.

Die erfindungsgemäßen Prepolymere können vorzugsweise auch zur Herstellung von Kleb- und Dichtstoffen bzw. Dichtmassen und Vergussmassen, 1-Komponenten- und 2-Komponenten-Polyurethanschaumstoffen eingesetzt werden. Bei der Anwendung als Dicht- oder Klebstoff erfolgt das Aushärten zum fertigen Polyurethan im einfachsten Fall durch Einwirkung von Luftfeuchtigkeit.

Die Erfindung soll in nachstehenden Ausführungsbeispielen näher erläutert werden.

### Beispiele

### Beispiel 1 (Vergleich): Difunktionelle MMDI-arme MDI Prepolymere

Zur Herstellung der MMDI-armen difunktionellen Referenzprepolymere wurde 1 Mol eines mit KOH als Katalysator hergestellte Polypropylenglykols mit einer OH-Funktionalität von Fₙ = 2 und mit Molekulargewichten M_{w} zwischen 450 (PPG450) und 4000 g/mol (PPG4000) tropfenweise und unter Rühren zu einem 7-molaren Überschuss des Diphenylmethandiisocyanats (4,4'-Isomeres) gegeben, welches in einem Laborreaktor bei 60°C vorgelegt war, und zur Reaktion gebracht. Nach vollständiger Zugabe wurde das Reaktionsgemisch drei Stunden bei 60°C gehalten.

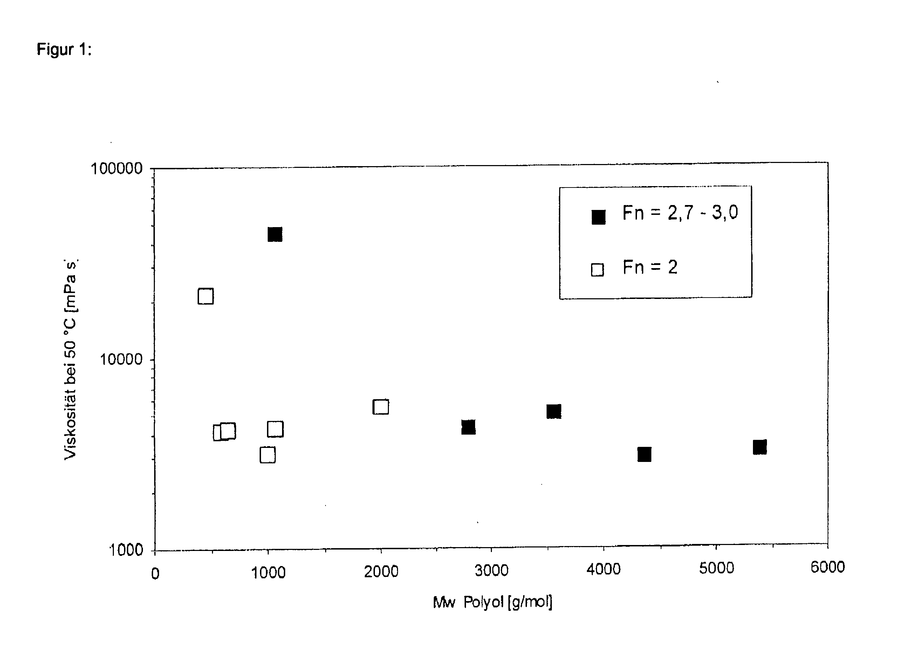

In einem Kurzwegverdampfer wurde das überschüssige Diphenylmethandiisocyanat entfernt, und man erhielt MMDI-arme Produkte mit einem Restgehalt an freiem Diisocyanat kleiner 0,1 Gew.-% und NCO-Werten zwischen 8,7 Gew.-% (PPG450) und 1,8 Gew.-% (PPG4000). Die zugehörigen dynamischen Viskositäten bei 50°C sind in Figur 1 dargestellt.

### Beispiel 2 (Vergleich): Difunktionelle MMDI-arme MDI Prepolymere ohne zusätzlichen Aufarbeitungsschritt

Zur Herstellung eines MMDI-armen difunktionellen NCO-Prepolymers ohne zusätzlichen destillativen Aufarbeitungsschritt wurde 1 Mol eines mit KOH als Katalysator hergestellten Polypropylenglykols mit einer OH-Funktionalität von Fₙ = 2 und mit einem mittleren Molekulargewicht von M_{w} = 880 g/mol tropfenweise und unter Rühren zu einem 1,5-molaren Überschuss des Diphenylmethandiisocyanats (2,4'-Isomeres) gegeben, welches in einem Laborreaktor bei 60°C vorgelegt war, und zur Reaktion gebracht. Der Polyolkomponente wurden 100 ppm des Sn(IV)-Katalysators DBTL zugesetzt. Nach vollständiger Zugabe wurde das Reaktionsgemisch 22 Stunden bei 60°C gehalten.

Man erhielt ein MMDI-armes NCO-Prepolymer mit einem Restgehalt an freiem Diisocyanat von ca. 830 ppm, einem NCO-Gehalt von 5,0 Gew.-% und einer dynamischen Viskosität bei 50°C von 17600 mPas.

### Beispiel 3 (Vergleich): Höherfunktionelle MMDI-arme MDI Prepolymere

### 3.1. Herstellung des NCO-Prepolymeren mit MMDI-Überschuss

In einer Apparatur, bestehend aus einem 1 I-Vierhalsglaskolben mit Thermometer, Rückflusskühler, Dosiertrichter und Rührer mit Rührmotor, wurden unter inerten Bedingungen 875 g 4,4'-MDI und 0,02 % Diethylenglykol-bis-chlorformiat, berechnet auf den Gesamtansatz, vorgelegt. Nach Einstellung der Reaktionstemperatur von 60°C wurden 0,5 Mol eines Glyzerin-gestarteten mit KOH katalysierten Polyetheralkohols so zudosiert, dass die Reaktionstemperatur auf 60 ≤ T ≥ 70°C gehalten wurde. Danach wurde 1 Stunde bei 70°C nachgerührt. Das erhaltene NCO-Prepolymer wurde im nachfolgend beschriebenen 2. Verfahrensschritt weiterverarbeitet.

### 3.2. Destillative Entfernung des monomeren MDI

Das wie unter 3.1. beschrieben hergestellte NCO-Prepolymer wurde in einer einstufigen Labor-Kurzwegverdampferapparatur in zwei Verdampferstufen diskontinuierlich entmonomerisiert. Die zugehörigen Verdampfungsparameter sind in Tabelle 1 zusammengestellt.

**Tabelle 1: Exemplarische Verdampfungsparameter für die Herstellung von MMDI-armen NCO-Prepolymeren in einer einstufigen Labor-Kurzwegverdampferapparatur**

| | 1. Verdampferstufe | 2. Verdampferstufe |
|---|---|---|
| Zulauf | ∼ 0,3 l/h | ~ 0,3 l/h |
| Verdampferöltemperatur | ∼ 175°C | ∼ 170°C |
| Druck | - 0,4 mbar | ∼ 0,05 mbar |

Man erhielt MMDI-arme ([MMDI] < 0,1 Gew.-%) NCO-Prepolymere mit verarbeitbaren Viskositäten. Die Viskosität nimmt mit zunehmendem Molekulargewicht M_{w} des zugrundeliegenden Polyetheralkohols tendenziell ab. Charakteristische Kenngrößen MMDI-armer 4,4' - MDI Prepolymere auf der Basis von Polyetheralkoholen mit erhöhter OH-Funktionalität Fₙ = 2,7-3 finden sich in Tabelle 2.

**Tabelle 2: NCO-Gehalt, dynamische Viskositäten und Rest-MMDI-Gehalt MMDI-armer NCO-Prepolymere auf Basis von Polyetheralkoholen erhöhter OH-Funktionalität (Fₙ = 2,7 - 3) und unterschiedlichem Molekulargewicht**

| Glyzerin-gestarteter KOH-katalysierter Polyetheralkohol | | NCO-Gehalt [Gew.-%] | Dynamische Viskosität (25°C) [mPa·s] | Dynamische Viskosität (50°C) [mPa·s] | MMDI-Restgehalt [ppm] |
|---|---|---|---|---|---|
| 1 | Lupranol®2090 (BASF) Fₙ: 2,7 M_{w}: 5380 g/mol | 2,0 | 17100 | 3280 | 70 |
| 2 | Lupranol^{®}2095 (BASF) Fₙ: 2,7 M_{w}: 4350 g/mol | 2,1 | 12580 | 3050 | 70 |
| 3 | Lupranol^{®}2047 (BASF) Fₙ: 2,7 M_{w}: 3540 g/mol | 2,4 | 14650 | 5220 | 70 |
| 4 | Lupranol^{®}2032 (BASF) Fₙ: 2,7 M_{w}: 2780 g/mol | 3,1 | 16170 | 4330 | 70 |
| 5 | Lupranvl^{®}VP9272 (BASF) Fₙ: 3 M_{w}: 1050 g/mol | 6,0 | nicht gemessen | 46240 | 470 |

Die Bestimmung der in Tabelle 2 aufgeführten Kenngrößen erfolgte nach folgenden Normen: EN ISO 11909 (Gehalt an freien NCO-Endgruppen); EN ISO 3219 (dynamische Viskosität); DIN 55672 (Bestimmung des MMDI-Restmonomergehaltes durch GPC-Analyse).

Auch bei einem zunehmend erhöhten Polymerisationsgrad des monomerarmen 4,4'-MDI-Lupranol 2095-Prepolymers, wie er durch Verringerung des 4,4'-MDI-überschusses bei der Prepolymersynthese von 7:1 auf 3:1 mit anschließender Abtrennung des monomeren Diisocyanates resultiert, werden Produkte mit vergleichbaren Verarbeitungseigenschaften erhalten (Tabelle 3).

**Tabelle 3: NCO-Gehalt, dynamische Viskosität und Rest-Monomergehalt von monomerarmem 4,4' -MDI-Lupranol 2095-Prepolymer ([MMDI]< 0,1 %) in Abhängigkeit vom Polymerisationsgrad**

| | | | | |
|---|---|---|---|---|
| NCO:XH | 7:1 | 5:1 | 4:1 | 3:1 |
| NCO [Gew.-%] | 2,2 | 2,1 | 2,1 | 2,0 |
| Viskosität bei 50°C [mPa·s] | 2310 | 2550 | 3730 | 5250 |
| MMDI [ppm] | 750 | 400 | 510 | 370 |

Die Viskositäten der höherfunktionellen NCO-Prepolymere sind gegenüber difunktionellen NCO-Prepolymeren (vgl. Beispiel 1) basierend auf Polyetheralkoholen mit vergleichbarem Molekulargewicht lediglich leicht erhöht.

### Beispiel 4 (Vergleich): Höherfunktionelle MMDI-arme MDI Prepolymere ohne zusätzlichen Aufarbeitungsschritt

Zur Herstellung MMDI-armer NCO-Prepolymere erhöhter Funktionalität ohne zusätzlichen destillativen Aufarbeitungsschritt wurde 1 Mol des mit KOH katalysierten Polyetheralkohols Lupranol^{®}2095 mit einer OH-Funktionalität von Fₙ = 2,7 und mit einem Molekulargewicht von M_{w} = 4350 g/mol tropfenweise und unter Rühren zu einem molaren Überschuss des Diphenylmethandiisocyanats (2,4'-Isomeres) gegeben, welches in einem Laborreaktor bei 60°C vorgelegt war, und zur Reaktion gebracht. Der Polyolkomponente wurden 100 ppm des Sn(IV)-Katalysators DBTL zugesetzt. Nach vollständiger Zugabe wurde das Reaktionsgemisch 22 Stunden bei 60°C gehalten.

Man erhielt MMDI-arme NCO-Prepolymere, wobei der Rest-MMDI-Gehalt für ein NCO:XH-Verhältnis größer 2, kleiner 1 Gew.-%, insbesondere kleiner 0,2 Gew.-% und weiterhin insbesondere kleiner 0,1 Gew.-% liegt. In Tabelle 3 sind charakteristische Kenngrößen solcher MMDI-armen 2,4'-MDI-Prepolymere aufgeführt. Ein exemplarisch mit einem molaren NCO:XH-Überschuss von 2,45:1 hergestelltes 4,4'-MDI/ Lupranol^{®}2095-Prepolymer besitzt eine so hohe Viskosität, dass eine Weiterverarbeitung nicht mehr gegeben ist.

**Tabelle 4: NCO-Gehalt, dynamische Viskosität und Rest-MMDI-Gehalt MMDI-armer 2,4'-MDI/Lupranol^{®}2095-Prepolymere erhöhter Funktionalität (Fₙ ∼ 2,7), welche ohne zusätzlichen Aufarbeitungsschritt mit verschiedenen NCO:XH-Verhältnissen synthetisiert wurden.**

| Prepolymersynthese: NCO:XH-Verhältnis | NCO-Gehalt [Gew.-%] | Dynamische Viskosität (50°C) [mPa·s] | MMDI-Restgehalt [ppm] |
|---|---|---|---|
| 2,7:1 | 2,0 | 3250 | 6057 |
| 2,45:1 | 1,6 | 6770 | 1919 |
| 2,2:1 | 1,2 | 7410 | 1888 |
| 2,05:1 | 1,0 | 57745 | 70 |

### Beispiel 5 (Erfindungsgemäß) Höherfunktionelle monomerarme MDI-Prepolymere unter Verwendung eines DMC-Polyols

Zur Herstellung eines monomerarmen MDI-Prepolymers wurde 1 Mol eines DMC-Polyetheralkohols (M_{w}: 3000 g/mol; Fn: 2,75) tropfenweise und unter Rühren zu 1,8 Mol Diphenylmethandiisocyanat (2,4'-Isomeres) gegeben, welches in einem Laborreaktor bei 50°C unter inerten Bedingungen (Stickstoff) zusammen mit 0,01 Gew.-% Dibutylzinndilaurat vorgelegt war, und zur Reaktion gebracht. Nach vollständiger Zugabe wurde das Reaktionsgemisch 1 Stunde bei 50°C gehalten.

Es wurde ein höherfunktionelles monomerarmes MDI-Prepolymer erhalten, das gegenüber dem Polyadditionsprodukt mit dem analogen KOH-Polyetheralkohol 500 ppm weniger MMDI enthielt und eine um 4000 mPa·s niedrigere Viskosität (gemessen bei 50°C) hatte (Tabelle 5).

Im entsprechenden Vergleichsbeispiel wurde ebenso verfahren, jedoch wurde ein mittels KOH katalysierter Polyetheralkohol (M_{w}: 3000 g/mol; Fn: 2,52) eingesetzt.

**Tabelle 5: Vergleich DMC-Polyetheralkohol und KOH-Polyetheralkohol über NCO-Gehalt, dynamische Viskosität und Rest-MMDI-Gehalt der erhaltenen MMDI-armen 2,4'-MDI-Prepolymere mit erhöhter Funktionalität**

| Höherfunktionelles monomerarmes MDI-Prepolymer auf Basis von | DMC-Polyetheralkohol | KOH-Polyetheralkohol |
|---|---|---|
| NCO | 1,4 Gew.-% | 1,4 Gew.-% |
| Dynamische Viskosität bei 50°C | 5580 mPa·s | 9822 mPa·s |
| MMDI | 501 ppm | 1093 ppm |

### Beispiel 6 (Erfindungsgemäß): Herstellung von monomerarmen difunktionellen 2,4'-MDI-Prepolymeren

182,9 g Lupranat MCI (BASF; 2,4'-MDI) und 0,1 g Diethylenglykol-bis-chlorformiat (DIBIS) wurden 1 I-Vierhalsglaskolben vorgelegt und unter inerten Bedingungen und Rühren auf 50°C temperiert. Anschließend wurde ein Gemisch aus 817,1 g Polyetheralkohol mit einem Molekulargewicht von 2000 g/mol und 75 mg Tegokat 221 (Th. Goldschmidt AG; Dibutylzinndineodecanoat) innerhalb von 30 min zudosiert. Nach einer Nachreaktion von 3 h bei 50°C wurde mit einem DMC-Polyetheralkohol (MG: 2000 g/mol) ein monomerarmes NCO-Prepolymer mit einem NCO-Gehalt von 2,4 Gew.-%, einer Viskosität von 1980 mPa·s bei 50°C und einem Restmonomer-MDI-Gehalt von 187 ppm erhalten. Das vergleichbare NCO-Prepolymer, das mit einem analogen KOH-Polyetheralkohol mit MG 2000 g/mol (BASF; Lupranol^{®} 1000) erhalten wurde, hatte einen NCO-Gehalt von 2,6 Gew.-%, eine Viskosität von 944 mPa·s bei 50°C und einen Restmonomer-MDI-Gehalt von 1586 ppm. Letzterer war um das 8-fache höher als bei dem vergleichbaren NCO-Prepolymer auf Basis des analogen DMC-Typs.

Im Lagerungstest bei 60°C über 3 Wochen verhielt sich das NCO-Prepolymer auf Basis des DMC-Polyetherakohols im Vergleich zum analogen KOH-Typ deutlich stabiler (Tabelle 6).

**Tabelle 6: Stabilität des 2,4'-MDI-Prepolymers auf Basis von DMC-Polyetheralkohol im Vergleich zu KOH-Polyetheralkohol gemäß dem vorstehenden Herstellungsbeispiel bei 60°C:**

| Polyetheralkohol Mw: 2000 g/mol | KOH-Katalyse | | DMC-Katalyse | |
|---|---|---|---|---|
| | NCO-Gehalt [Gew.-%] | Viskosität bei 50°C [mPa·s] | NCO-Gehalt [Gew.-%] | Viskosität bei 50°C [mPa·s] |
| Frisch | 2,6 | 944 | 2,4 | 1980 |
| 1 Woche | 1,8 | 5070 | 1,9 | |
| 2 Wochen | 1,8 | 5720 | 2,1 | 4470 |
| 3 Wochen | 1,7 | 6530 | 2,0 | 4910 |

## Patentansprüche

1. Verfahren zur Herstellung von Isocyanatgruppen enthaltenden Prepolymeren mit einem Gehalt an monomeren Isocyanaten von kleiner als 10 Gew.-%, bezogen auf das Gewicht des Prepolymeren, durch Umsetzung von a) Polyisocyanaten mit b) Verbindungen mit mindestens zwei mit Isocyanatgruppen reaktiven Wasserstoffatomen bei einem Überschuss an Polyisocyanat zwischen 1:1 und 7:1, **dadurch gekennzeichnet, dass** die Umsetzung katalysatorfrei oder in Anwesenheit von tertiären Aminen oder organischen Metallverbindungen als Katalysatoren durchgeführt wird, und dass als Verbindungen mit mindestens zwei mit Isocyanatgruppen reaktiven Wasserstoffatomen b) Polyetheralkohole eingesetzt werden, die durch Anlagerung von Alkylenoxiden an H-funktionelle Starter unter Verwendung von DMC-Katalysatoren hergestellt wurden und dass als Polyisocyanat a) asymmetrische Polyisocyanate eingesetzt werden.

2. Verfahren nach Anspruch 1, **dadurch gekennzeichnet, dass** als Verbindungen mit mindestens zwei mit Isocyanatgruppen reaktiven Wasserstoffatomen b) solche mit einer Funktionalität im Bereich zwischen 2 und 10 eingesetzt werden.

3. Verfahren nach Anspruch 1, **dadurch gekennzeichnet, dass** als Verbindungen mit mindestens zwei mit Isocyanatgruppen reaktiven Wasserstoffatomen b) solche mit einer Funktionalität im Bereich zwischen 2,1 und 4 eingesetzt werden.

4. Verfahren nach Anspruch 1, **dadurch gekennzeichnet, dass** als Verbindungen mit mindestens zwei mit Isocyanatgruppen reaktiven Wasserstoffatomen b) solche mit einer Funktionalität im Bereich zwischen 2,5 und 3,2 eingesetzt werden.

5. Verfahren nach Anspruch 1, **dadurch gekennzeichnet, dass** als Verbindungen mit mindestens zwei mit Isocyanatgruppen reaktiven Wasserstoffatomen b) mehrwertige Alkohole, Polyetheralkohole und/oder Polyesteralkohole oder Mischungen daraus eingesetzt werden.

6. Verfahren nach Anspruch 1, **dadurch gekennzeichnet, dass** als Verbindungen mit mindestens zwei mit Isocyanatgruppen reaktiven Wasserstoffatomen b) solche mit einem Molekulargewicht Mn zwischen 60 und 10000 g/mol eingesetzt werden.

7. Verfahren nach Anspruch 1, **dadurch gekennzeichnet, dass** als Verbindungen mit mehr als zwei Isocyanatgruppen im Molekül a) solche mit mindestens dreikemigen Homologen des MDI eingesetzt werden.

8. Verfahren nach Anspruch 1, **dadurch gekennzeichnet, dass** als Verbindungen mit mehr als zwei Isocyanatgruppen im Molekül a) Polyisocyanate mit Isocyanurat-, Allophanat-, Biuret-, Uretdion-, Uretonimin- und/oder Carbodiimidgruppen eingesetzt werden.

9. Verfahren nach Anspruch 1, **dadurch gekennzeichnet, dass** die Isocyanatgruppen enthaltenden Prepolymere einen NCO-Gehalt von 0,5 bis 20 Gew.-% aufweisen.

10. Verfahren nach Anspruch 1, **dadurch gekennzeichnet, dass** die Isocyanatgruppen enthaltenden Prepolymere einen NCO-Gehalt von 0,5 bis 10 Gew.-% aufweisen

11. Verfahren nach Anspruch 1, **dadurch gekennzeichnet, dass** die Isocyanatgruppen enthaltenden Prepolymere einen NCO-Gehalt von 1 bis 3 Gew.-% aufweisen.

12. Verfahren nach Anspruch 1, **dadurch gekennzeichnet, dass** nach der Umsetzung der Polyisocyanate a) mit den Verbindungen mit mindestens zwei mit Isocyanatgruppen reaktiven Wasserstoffatomen b) die nicht umgesetzten Polyisocyanate abgetrennt werden.

13. Verfahren nach Anspruch 1, **dadurch gekennzeichnet, dass** die Abtrennung der nicht umgesetzten Polyisocyanate destillativ erfolgt.

14. Verfahren nach Anspruch 1, **dadurch gekennzeichnet, dass** nach der Umsetzung der Polyisocyanate a) mit den Verbindungen mit mindestens zwei mit Isocyanatgruppen reaktiven Wasserstoffatomen b) keine Abtrennung der nicht umgesetzten Polyisocyanate erfolgt.

15. Verfahren nach Anspruch 14, **dadurch gekennzeichnet, dass** die Isocyanatgruppen enthaltenden Prepolymere durch Umsetzung von Polyisocyanaten a) mit Verbindungen mit mehr als zwei mit Isocyanatgruppen reaktiven Wasserstoffatomen im Molekül mit einem Molgewicht von 3000 bis 5500 g/mol in einem Verhältnis der NCO-Gruppen mit den mit NCO-Gruppen reaktiven Wasserstoffatomen von größer gleich 2 erhalten werden.

16. Verfahren nach Anspruch 15, **dadurch gekennzeichnet, dass** die Isocyanatgruppen enthaltenden Prepolymere einen Restmonomergehalt von kleiner 0,1 Gew.-%, bezogen das Gewicht des Prepolymeren, aufweisen.

## Claims

1. A process for preparing prepolymers which comprise isocyanate groups and have a content of monomeric isocyanates of less than 10% by weight, based on the weight of the prepolymer, by reacting a) polyisocyanates with b) compounds having at least two hydrogen atoms which are reactive toward isocyanate groups at an excess of polyisocyanate of from 1:1 to 7:1, wherein the reaction is carried out in the absence of catalysts or in the presence of tertiary amines or organic metal compounds as catalysts, and wherein polyether alcohols which have been prepared by addition of alkylene oxides onto H-functional starters using DMC catalysts are used as compounds having at least two hydrogen atoms which are reactive toward isocyanate groups b) and wherein unsymmetrical polyisocyanates are used as polyisocyanates a).

2. The process according to claim 1, wherein the compounds having at least two hydrogen atoms which are reactive toward isocynate groups b) which are used have a functionality in the range from 2 to 10.

3. The process according to claim 1, wherein the compounds having at least two hydrogen atoms which are reactive toward isocynate groups b) which are used have a functionality in the range from 2.1 to 4.

4. The process according to claim 1, wherein the compounds having at least two hydrogen atoms which are reactive toward isocyanate groups b) which are used have a functionality in the range from 2.5 to 3.2.

5. The process according to claim 1, wherein polyhydric alcohols, polyether alcohols and/or polyester alcohols or mixtures thereof are used as compounds having at least two hydrogen atoms which are reactive toward isocyanate groups b).

6. The process according to claim 1, wherein the compounds having at least two hydrogen atoms which are reactive toward isocyanate groups b) have a molecular weight Mₙ of from 60 to 10 000 g/mol.

7. The process according to claim 1, wherein the compounds having more than two isocyanate groups in the molecule a) which are used are compounds of this type comprising at least three-ring homologues of MDI.

8. The process according to claim 1, wherein polyisocyanates having isocyanurate, allophanate, biuret, uretdione, uretonimine and/or carbodiimide groups are used as compounds having more than two isocyanate groups in the molecule a).

9. The process according to claim 1, wherein the prepolymers comprising isocyanate groups have an NCO content of from 0.5 to 20% by weight.

10. The process according to claim 1, wherein the prepolymers comprising isocyanate groups have an NCO content of from 0.5 to 10% by weight.

11. The process according to claim 1, wherein the prepolymers comprising isocyanate groups have an NCO content of from 1 to 3% by weight.

12. The process according to claim, wherein the reaction of the polyisocyanates a) with the compounds having at least two hydrogen atoms which are reactive toward isocyanate groups b) is followed by removal of the unreacted polyisocyanates.

13. The process according to claim 1, wherein the removal of the unreacted polyisocyanates is carried out by distillation.

14. The process according to claim 1, wherein the reaction of the polyisocyanates a) with the compounds having at least two hydrogen atoms which are reactive toward isocyanate groups b) is not followed by removal of the unreacted polyisocyanates.

15. The process according to claim 14, wherein the prepolymers comprising isocyanate groups are obtained by reacting polyisocyanates a) with compounds having more than two hydrogen atoms which are reactive toward isocyanate groups in the molecule and a molecular weight of from 3000 to 5500 g/mol in a ratio of the NCO groups to the hydrogen atoms which are reactive toward NCO groups of greater than or equal to 2.

16. The process according to claim 15, wherein the prepolymers comprising isocyanate groups have a residual monomer content of less than 0.1% by weight, based on the weight of the prepolymer.

## Revendications

1. Procédé de fabrication de prépolymères contenait des groupes isocyanate ayant une teneur en isocyanates monomère intérieure à 10 % en poids par rapport au poids du prépolymère, par mise en réaction de a) des polyisocyanates avec b) des composés contenant au moins deux atomes d'hydrogène réactifs avec les groupes isocyanate à un excès de polyisocyanate compris entre 1:1 et 7:1, **caractérisé en ce que** la réaction est réalisée sans catalyser ou en présente d'amines tertiaires ou de composés métalliques organiques en tant que catalyseurs, et **en ce que** des polyéther-alcools qui ont été fabriqués par addition d'oxydes d'alkylène sur des produits de départ à fonction H en utilisant des catalyseur DMC sont utilisés en tant que composés contenant au moins deux atomes d'hydrogène réactifs avec les groupes isocynate b), et **en ce que** des polyisocyanates asymétriques sont utilisés en tant que polyisocyanate a).

2. Procédé selon la revendication 1, **caractérisé en ce que** des composés ayant une fonctionnalisé dans la plage comprise entre 2 et 10 sont utilisés en tant que composés contenant au moins deux atomes d'hydrogène réactifs avec les groupes isocyanate b).

3. Procédé selon la revendication 1, **caractérisé en ce que** des composés ayant une fonctionnalité dans la plage comprise entre 2,1 et 4 sont utilisés en tant que composés convenant au moins deux atomes d'hydrogène réactifs avec les groupes isocyanate b).

4. Procédé selon la revendication 1, **caractérisé en ce que** des composés ayant une fonctionnalité dans la pilage comprise entre 2,5 et 3,2 sont utilisés en tant que composés contentant au moins deux atomes d'hydrogène réactifs avec les groupes isocyanate b).

5. Procédé selon la revendication 1, **caractérisé en ce que** des alcools polyvalents, des polyéther-alcools et/ou des polyester-alcools ou leurs mélanges sont utilisés en tant que composés convenant au moins deux atomes d'hydrogène réactifs avec les groupes isocyanate b).

6. Procédé selon la revendication 1, **caractérisé en ce que** des composés ayant un poids moléculaire Mn compris entre 60 et 10 000 g/mol sont utilisés en tant que composés convenant au moins deux atomes d'hydrogène réactifs avec les groupes isocynate b).

7. Procédé selon la revendication 1, **caractérisé en ce que** des composés convenant des homologues au moins trinucléaires du MDI sont utilisés en tant que composés convenant plus de deux groupes isocyanate par molécule a).

8. Procédé selon la revendication 1, **caractérisé en ce que** des polyisocyanates contentant des groupes isocyanurate, allophanate, biuret, uretdione, urétonimine et/ou carbodiimide sont utilisés en tant que composés convenant plus de deux groupes isocyanate par molécule a).

9. Procédé selon la revendication 1, **caractérisé en ce que** les prépolymères contenant des groupes isocyanate présentent une teneur en NCO de 0,5 à 20 % en poids.

10. Procédé selon la revendication 1, **caractérisé en ce que** les prépolymères contenant des groupes isocyanate présentent une teneur en NCO de 0,5 à 10 % en poids.

11. Procédé selon la revendication 1, **caractérisé en ce que** les prépolymères contentant des groupes isocyanate présentent une teneur en NCO de 1 à 3 % en poids.

12. Procédé selon la revendication 1, **caractérisé en ce que** les polyisocyanates non réagis sont séparés après la réaction des polyisocyanates a) avec les composés convenant au moins deux atomes d'hydrogène réactifs avec les groupes isocynate b).

13. Procédé selon la revendication 1, **caractérisé en ce que** la séparation des polyisocyanates non réagis a lieu par distillation.

14. Procédé selon la revendication 1, **caractérisé en ce qu'**aucune réparation des polyisocyanates non réagis n'a lieu après la réaction des polyisocyanates a) avec les composés contentant au moins deux atomes d'hydrogène réactifs avec les groupes isocyanate b).

15. Procédé selon la revendication 14, **caractérisé en ce que** les prépolyméres contenant des groupes isocyanate sont obtens par mise en réaction de polyisocyanates a) avec des composés contenant plus de deux atomes d'hydrogène réactifs avec les groupes isocyanate par molécule, d'un poids moléculaire de 3 000 à 5 500 g/mol, en un rapport entre les groupes NCO et les atomes d'hydrogène réactifs avec les groupes NCO supérieur ou égal à 2.

16. Procédé selon la revendication 15, **caractérisé en ce que** les prépolymères contentant des groupes isocyanate présentant une teneur en monomètres résiduels inférieure à 0,1 % en poids par rapport au poids des prépolymères.
